# EUROPEAN PATENT APPLICATION

(11) **EP 4 488 803 A1**
(43) Date of publication of application: **08.01.2025**
(21) Application number: 24162672.0
(22) Date of filing: 11.03.2024
(51) Int. Cl.: G06F 3/01, G06F 3/03, G06N 3/045, G06N 3/08, G06V 10/22, G06V 40/16, G06V 40/19

(54) **APPARATUS CONTROL METHOD, MODEL TRAINING METHOD AND ELECTRONIC APPARATUS**

(30) Priority: 03.07.2023 CN 202310808202
(71) Applicant: Beijing Xiaomi Mobile Software Co., Ltd., Beijing 100085 (CN)
(72) Inventor: YAN, Yong, Beijing, 100085 (CN); HU, Jiaye, Beijing, 100085 (CN); LIU, Yichao, Beijing, 100085 (CN); CHEN, Xiaoqing, Beijing, 100085 (CN); LI, Jiahao, Beijing, 100085 (CN)
(74) Representative: Hersina, Günter

(57) **Abstract**

An apparatus control method includes: acquiring one or more facial images; performing an eye behavior recognition based on at least one of the facial images to obtain an eye behavior information on the at least one of the facial images; determining a target control instruction based on the eye behavior information on the at least one of the facial images; and performing apparatus control based on the target control instruction.

## Description

### FIELD

This application relates to the field of human-computer interaction technology and more particularly, to an apparatus control method, a model training method and an electronic apparatus.

### BACKGROUND

At present, various types of methods exist for apparatus control, including voice control, mobile APP control, and remote control and so on. Among them, voice control is the most popular control method for apparatuses, and the voice control over apparatuses is realized through smart speakers or smart voice assistants. Mobile APP control and remote control are both common control methods. However, these control methods cannot meet users' demands for personalized control.

### SUMMARY

The present invention aims to solve one of the technical problems in the related art at least to some extent.

Accordingly, a first purpose of the present invention is to propose an apparatus control method that controls an apparatus through eye behavior information, which can meet a user's demand for personalized control over the apparatus, enhance richness and convenience of apparatus control, and improve user experience.

A second purpose of the present invention is to propose an electronic apparatus.

A third purpose of the present invention is to propose a computer-readable storage medium.

In order to achieve the above purposes, a first aspect of embodiments of the present invention provides an apparatus control method that includes: acquiring one or more facial images; performing an eye behavior recognition based on at least one of the facial images to obtain eye behavior information on at least one of the facial images; determining a target control instruction based on the eye behavior information on the one or more facial images; and performing apparatus control based on the target control instruction.

In an embodiment of the present invention, the eye behavior information includes a gaze direction. Determining the target control instruction based on the eye behavior information on the one or more facial images includes: combining the gaze direction of at least one of the facial images according to an acquisition order of the one or more facial images to obtain a gaze direction sequence; matching the gaze direction sequence with a preset standard sequence; and determining the target control instruction according to a control instruction corresponding to the matched standard sequence.

In an embodiment of the present invention, matching the gaze direction sequence with the preset standard sequence includes: merging adjacent and identical gaze directions in the gaze direction sequence to obtain a merged sequence; and determining that the gaze direction sequence matches the standard sequence in case that at least one continuous sub-sequence in the merged sequence is identical to the preset standard sequence.

In an embodiment of the present invention, performing apparatus control based on the target control instruction includes: controlling an application program run on a wearable apparatus based on the target control instruction. The application program executes at least one of: controlling operation of a smart home apparatus; playing or pausing display of a multimedia resource; or controlling a camera of the wearable apparatus to capture an object of gaze.

In an embodiment of the present invention, performing the eye behavior recognition based on at least one of the facial images to obtain eye behavior information on at least one of the facial images includes: extracting an eye image for at least one of the facial images; extracting features from the eye image and the corresponding facial image, separately; and classifying based on the features of the eye image and the corresponding facial image to obtain the eye behavior information.

In an embodiment of the present invention, extracting the eye image for at least one of the facial images includes: performing eye outer contour recognition on at least one of the facial images; and extracting, by a minimum bounding box surrounding an eye outer contour, a part located within the minimum bounding box as the extracted eye image.

In an embodiment of the present invention, the eye image includes a left eye image and a right eye image. Extracting features from the eye image and the corresponding facial image separately includes: inputting the left eye image and the right eye image into corresponding first feature extraction networks for feature extraction, wherein each of the first feature extraction networks extracts at least one of a pupil position feature or an eye shape feature; and inputting the facial image into a second feature extraction network for feature extraction, to obtain a feature of the facial image, wherein a convolution kernel of the second feature extraction network is larger than a convolution kernel of the first feature extraction network.

In an embodiment of the present invention, classifying based on the features of the eye image and the corresponding facial image to obtain the eye behavior information includes: inputting features extracted from the left eye image and the right eye image into a first fully connected layer for vector space mapping to obtain an output of the first fully connected layer; inputting the feature of the facial image into a second fully connected layer for vector space mapping to obtain an output of the second fully connected layer; inputting the output of the first fully connected layer and the output of the second fully connected layer into a third fully connected layer for vector space mapping to obtain an output of the third fully connected layer; and activating the output of the third fully connected layer by using an activation function layer to classify and obtain the eye behavior information.

In an embodiment of the present invention, each of the first feature extraction network and the second feature extraction network includes one or more convolution blocks connected in sequence, and each of the convolution blocks includes: a convolution layer that performs a convolution operation by using a convolution kernel; and a pooling layer that takes a most prominent feature output by the convolution layer in the convolution block as an input of a next convolution block.

In an embodiment of the present invention, before determining the target control instruction according to the control instruction corresponding to the matched standard sequence, the apparatus control method includes: presetting a corresponding relationship between the standard sequence and the control instruction
In order to achieve the above purposes, a second aspect of embodiments of the present invention proposes an electronic apparatus that includes: at least one processor; and a memory communicating with the at least one processor. The memory stores an instruction executable by the at least one processor, and the instruction, when executed by the at least one processor, causes the at least one processor to execute the apparatus control method according to the first aspect of embodiments of the present invention.

In order to achieve the above purposes, a third aspect of embodiments of the present invention proposes a computer-readable storage medium having stored therein an instruction that, when executed by a computer, causes the computer to execute the apparatus control method according to the first aspect of embodiments of the present invention.

The technical solutions according to the embodiments of the present invention have the following beneficial effects.

According to the embodiments of the present invention, one or more facial images are acquired; an eye behavior recognition is performed based on at least one of the facial images to obtain eye behavior information on at least one of the facial images; a target control instruction is determined based on the eye behavior information on the one or more facial images; and apparatus control is performed based on the target control instructions. Consequently, the method can control the apparatus through the eye behavior information, which can meet the user's demand for personalized control over the apparatus, enhance the richness and convenience of apparatus control, and improve the user experience.

Additional aspects and advantages of embodiments of the present invention will be given in part in the following descriptions, become apparent in part from the following descriptions, or be learned from the practice of the embodiments of the present invention.

### BRIEF DESCRIPTION OF THE DRAWINGS

These and other aspects and advantages of embodiments of the present invention will become apparent and more readily appreciated from the following descriptions made with reference to the drawings, in which:
Fig. 1 is a flowchart of an apparatus control method according to an embodiment of the present invention;
Fig. 2 is a schematic diagram of a smart home apparatus control scenario according to an embodiment of the present invention;
Fig. 3 is a flowchart of an execution process of step S102 in the flowchart of Fig. 1 according to an embodiment of the present invention;
Fig. 4 is a structural diagram of a recognition mode according to an embodiment of the present invention;
Fig. 5 is a flowchart of a model training method according to an embodiment of the present invention;
Fig. 6 is a schematic diagram of obtaining a prediction result according to an embodiment of the present invention;
Fig. 7 is a block diagram of an apparatus control device according to an embodiment of the present invention;
Fig. 8 is a block diagram of a model training device according to an embodiment of the present invention.

### DETAILED DESCRIPTION

Embodiments of the present invention are described in detail below, and examples of the embodiments are shown in accompanying drawings. Same or similar reference numerals from beginning to end indicate same or similar elements or elements having same or similar functions. The following embodiments described with reference to the accompanying drawings are exemplary and are intended to explain rather than limit the present invention.

An apparatus control method, a model training method and device according to embodiments of the present invention will be described below with reference to the drawings.

Before introducing the apparatus control method according to the embodiments of the present invention, eye tracker technology will be introduced.

Eye tracker technology is a technology used to measure eye movements, which can be used to study visual processing and cognitive processes by recording eye movements and reaction time in visual tasks. The main principle of eye tracker technology is to detect the movement of eyeball through infrared rays or electrodes, and then transmit the data to the computer for analysis and processing. The technical solution of eye tracker includes solution of hardware and software. In the hardware aspect, eye tracker is usually composed of infrared camera, light source, glasses or head-mounted apparatus, which is used to capture eye movement data. In terms of software, eye tracker is usually equipped with data acquisition, analysis and visualization tools to process and present eye movement data.

At present, eye tracking is carried out by using eye tracker and other apparatus, and eye intention recognition and prediction are carried out by using deep learning technology. However, the eye tracker has the following defects.

Limited accuracy: the accuracy of eye tracker is affected by many factors, such as eyeball size, vision, pupil size, head movement, etc., which may lead to measurement errors.

Limited scope of application: eye tracker is usually only suitable for static or semi-static environment, such as laboratory and office, while in dynamic environment, such as outdoor and sports venues, the measurement accuracy of eye tracker will be greatly affected due to factors such as head movement and environmental interference.

High apparatus cost: the apparatus cost of eye tracker is high, which requires professional apparatus and technical support.

Complex data processing: the data collected by eye tracker need complex processing and analysis, and professional software and technical support are needed.

Poor experience of subjects: when using eye tracker to carry out experiments, subjects need to wear apparatus and keep their heads relatively fixed, which may affect their comfort and experience.

When the light is poor, the recognition rate is limited. The pupil recognition here usually depends on the obvious color difference between the pupil and the white of the eye, thus directly locking the position of the pupil, which is easy to be mistaken in the dark.

Consequently, the present invention proposes an apparatus control method based on smart glasses, which can accurately obtain eye behavior information and control the apparatus through the eye behavior information, thus meeting the user's demand for personalized control over the apparatus, enhancing the richness and convenience of apparatus control and improving the user experience.

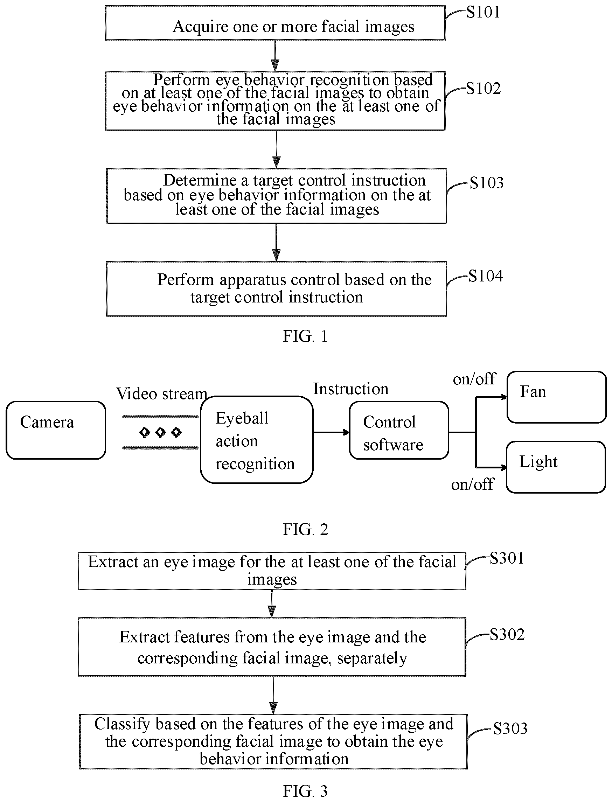

Fig. 1 is a flowchart of an apparatus control method according to an embodiment of the present invention.

As shown in Fig. 1, the apparatus control method according to the embodiments of the present invention includes the following steps.

At S101, one or more facial images are acquired.

For example, one or more facial images are captured by a camera of a wearable apparatus such as smart glasses. It can be understood that each image represents one frame of a video.

At S 102, an eye behavior recognition is performed based on at least one of the facial images to obtain eye behavior information on at least one of the facial images.

For example, a behavior recognition algorithm (such as a trained recognition model) can be used to recognize the eye behavior of each facial image, so as to obtain the eye behavior information on each facial image including at least the gaze direction. Among them, the eye behavior information may include the left eye behavior information and/or the right eye behavior information, which is not specifically limited by the present invention. For the convenience of explanation, the following is an example of eye behavior information including left eye behavior information and right eye behavior information.

At S103, a target control instruction is determined based on eye behavior information on the one or more facial images.

When the eye behavior information includes a gaze direction, gaze directions of a plurality of facial images are combined according to an acquisition sequence of the plurality of facial images to obtain a gaze direction sequence. Then, the gaze direction sequence is matched with a preset standard sequence, and the target control instruction is determined according to a control instruction corresponding to the matched standard sequence.

In the process of matching the gaze direction sequence with the preset standard sequence, adjacent and identical gaze directions in the gaze direction sequence are merged to obtain a merged sequence, and then all continuous sub-sequences in the merged sequence are compared with the preset standard sequence. It is determined that the gaze direction sequence matches the standard sequence when at least one continuous sub-sequence in the merged sequence is identical to the preset standard sequence.

It should be noted that before determining the target control instruction according to the control instruction corresponding to the matched standard sequence, the corresponding relationship between the standard sequence and the control instruction can be preset, so that the target control instruction corresponding to the matched standard sequence can be determined according to the preset corresponding relationship after obtaining the matched standard sequence.

At S 104, apparatus control is performed based on the target control instruction.

In step S104, based on the target control instruction, an application program run on the wearable apparatus is controlled.

The application program is used to execute at least one of: controlling operation of a smart home apparatus; playing or pausing display of a multimedia resource; or controlling a camera of the wearable apparatus to capture an object of gaze.

For example, in a smart home apparatus control scenario, as shown in Fig. 2, after a video stream is captured by the camera, the eye behavior is recognized to obtain the eye behavior information, and the target control instruction is determined based on the eye behavior information and sent to the control software. The control software controls (such as turning on or off) smart home apparatus (such as smart lights, smart fans, smart air conditioners, etc.) according to the target control instructions, so as to meet the needs of users for personalized control, improve the richness and convenience of apparatus control, and improve the convenience and comfort of family life.

In a multimedia resource display scenario, after the target control instruction is determined through smart glasses, the smart home apparatus (such as smart TV and smart projector) is controlled (such as playing or pausing) according to the target control instruction, so as to meet the user's demand for personalized control, improve the richness and convenience of apparatus control and enhance the user experience.

In a retail scenario, after determining the target control instruction through smart glasses, the camera of the wearable apparatus is controlled to collect the watched object, so as to track the user's eyeball intention in the shop through smart glasses and understand the user's attention degree and purchase willingness to different commodities, thereby optimizing the commodity display and promotion strategy and increasing sales.

In this scenario, users put on smart glasses after entering the store. Smart glasses can understand users' attention and willingness to buy different products by tracking users' eye behaviors, mainly eye intentions, in real time. By analyzing these data, shop can optimize store display and promotion strategies and increase sales. For example, if smart glasses find that users pay high attention to a commodity, but the display position of the commodity is not conspicuous enough, the shop can put it in a more conspicuous position, thus increasing sales.

Consequently, the apparatus control method of the present invention has the following advantages.

The user experience is upgraded by tracking the user's eye intention, smart glasses can better understand the user's needs and interests, thus providing more personalized services and recommendations and improving the user experience.

The work efficiency is improved. Smart glasses can identify users' work priorities and concerns by tracking users' eyeball intentions, thus providing more accurate information and guidance to help users complete their work more efficiently.

Safety risks are reduced. Smart glasses can identify the user's concentration by tracking the user's eyeball intention, thus reminding users to pay attention to safety and avoiding accidents.

Marketing effect is improved. Smart glasses can understand users' shopping preferences and interests by tracking users' eyeball intentions, thus providing more accurate advertisements and recommendations and improving marketing effect.

In order to make those skilled in the art understand the process of step S 102 more clearly, Fig. 3 shows a flowchart of an execution process of step S 102 according to an embodiment of the present invention. As shown in Fig. 3, the execution process of step S102 includes the following steps.

At S301, an eye image is extracted for at least one of the facial images.

In this step, for each facial image, an eye outer contour is recognized first. In the process of eye outer contour recognition, a minimum bounding box surrounding the eye outer contour is taken as the eye outer contour. After the minimum bounding box of the eye outer contour is recognized, a part located within the minimum bounding box is extracted as the extracted eye image.

At S302, features are extracted from the eye image and the corresponding facial image, separately.

The eye image may include a left eye image and a right eye image.

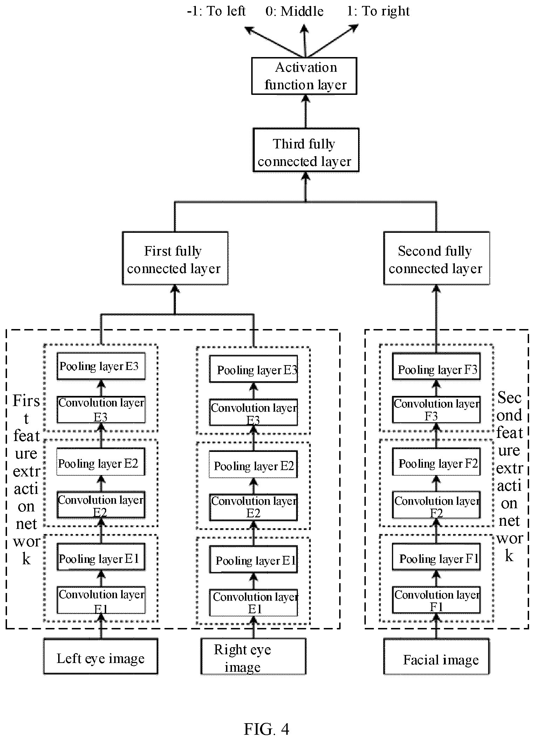

In this embodiment, as shown in Fig. 4, in the process of feature extraction of the eye image, the left eye image and the right eye image are separately input into a corresponding first feature extraction network for feature extraction, so as to obtain the features of the eye image, which include a feature of the left eye image and a feature of the right eye image. The features extracted by the first feature extraction network include at least one of a pupil position feature or an eye shape feature. That is, the pupil position and/or eye shape features of the left eye image and the pupil position and/or eye shape features of the right eye image can be obtained. It should be noted that due to different matrix sizes of the input left eye image and right eye image, sizes of convolution kernels used by the left eye layout image and the right eye image are different.

In the process of feature extraction of the facial image, the facial image is input into a second feature extraction network for feature extraction to obtain a feature of the facial image. A convolution kernel of the second feature extraction network is larger than a convolution kernel of the first feature extraction network.

Each of the first feature extraction network and the second feature extraction network includes one or more convolution blocks connected in sequence. Each of the convolution blocks includes a convolution layer that performs a convolution operation by using a convolution kernel, and a pooling layer that takes a most prominent feature output by the convolution layer in the convolution block as an input of a next convolution block. For example, the first feature extraction network sequentially includes a first convolution block CONV-E1 (convolution layer E1 and pooling layer E1), a second convolution block CONV-E2 (convolution layer E2 and pooling layer E2) and a third convolution block CONV-E3 (convolution layer E3 and pooling layer E3); and the second feature extraction network sequentially includes a first convolution block CONV-F1 (convolution layer F1 and pooling layer F1), a second convolution block CONV-F2 (convolution layer F2 and pooling layer F2) and a third convolution block CONV-F3 (convolution layer F3 and pooling layer F3).

At S303, the eye behavior information is obtained by classifying based on the features of the eye image and the corresponding facial image.

In this step, referring to Fig. 4, the features extracted from the left eye image and the right eye image are input into a first fully connected layer FC-E1 for vector space mapping to obtain an output of the first fully connected layer FC-E1, and at the same time, the feature of the facial image is input into a second fully connected layer FC-F1 for vector space mapping to obtain an output of the second fully connected layer FC-F1. Then, the output of the first fully connected layer FC-E1 and the output of the second fully connected layer FC-F1 are input into a third fully connected layer FC for vector space mapping to obtain an output of the third fully connected layer FC. Finally, a activation function layer Softmax is used to activate the output of the third fully connected layer to classify and obtain the eye behavior information. For example, -1 can be output to the left, 0 to the middle, and 1 to the right.

In conclusion, one or more facial images are first obtained, and an eye behavior recognition is performed based on each facial image to obtain eye behavior information on each facial image. Then, based on the eye behavior information on one or more facial images, the target control instruction is determined, and an apparatus control is performed based on the target control instruction. Consequently, this method can accurately obtain the eye behavior information, and control the apparatus through the eye behavior information, which can meet the user's demand for personalized control over the apparatus, improve the richness and convenience of apparatus control, and enhance the user experience.

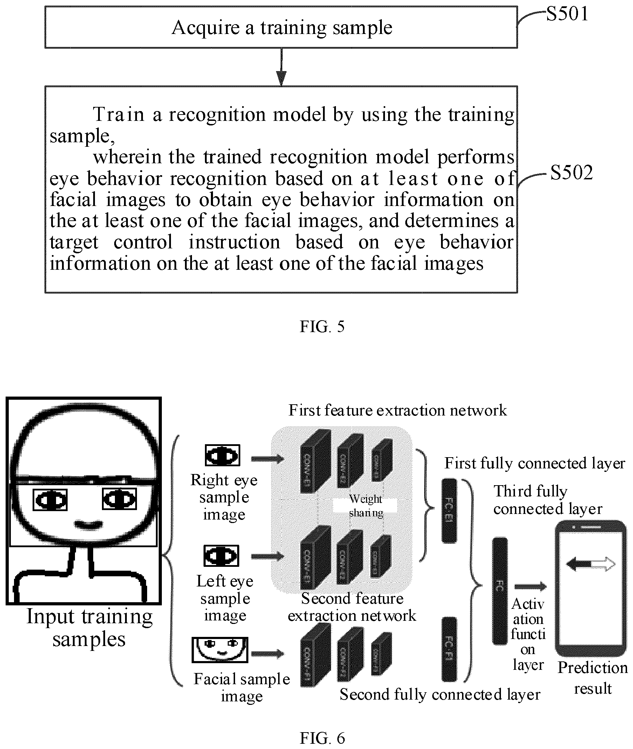

Fig. 5 is a flowchart of a model training method according to an embodiment of the present invention.

As shown in Fig. 5, the model training method according to the embodiments of the present invention includes the following steps.

At S501, a training sample is acquired.

In this step, the training sample can adopt face data in a face recognition database. After obtaining the face data, a facial sample image and an eye sample image are collected and made into RGB data, and then a set number of samples with eyeball turning left and turning right are generated by using manual annotation in combination with open-source datasets.

For example, as shown in Fig. 6, the training sample includes a facial sample image, an eye sample image, and annotated eye behavior information.

At S502, the recognition model is trained by using the training sample, in which the trained recognition model performs an eye behavior recognition based on at least one of facial images to obtain eye behavior information on the at least one of the facial images, and determines a target control instruction based on the eye behavior information on the at least one of the facial images.

In this step, the eye sample image and the facial sample image are input into the recognition model for feature extraction, and classification is performed based on extracted features to obtain predicted behavior information output by the recognition model. Referring to Fig. 6, when the eye sample image includes a left eye sample image and a right eye sample image, the left eye sample image and the right eye sample image are input into a first feature extraction network in the recognition model for feature extraction, and the first feature extraction network extracts at least one of a pupil position feature or an eye shape feature. At the same time, the facial sample image is input into a second feature extraction network in the recognition model for feature extraction, in which a convolution kernel of the second feature extraction network is larger than a convolution kernel of the first feature extraction network. Then, features extracted from the left eye sample image and the right eye sample image are input into a first fully connected layer for vector space mapping, and inputting a feature of the facial sample image into a second fully connected layer for vector space mapping. An output of the first fully connected layer and an output of the second fully connected layer are input into a third fully connected layer for vector space mapping to obtain an output of the third fully connected layer. Finally, the output of the third fully connected layer is activated by using an activation function layer to classify and obtain the predicted behavior information, i.e., a prediction result.

Then, based on a difference (i.e., a loss value) between the predicted behavior information and the labeled eye behavior information, a model parameter of the recognition model is adjusted to make the difference between the predicted behavior information and the labeled eye behavior information meet a set requirement, so as to improve the recognition accuracy of the recognition model and obtain the eye behavior information more accurately.

The model training method according to the embodiments of the present invention obtains training samples and trains the recognition model by using the training samples, and uses the trained recognition model for the eye behavior recognition based on each facial image to obtain eye behavior information on each facial image, so as to determine the target control instruction for apparatus control based on the eye behavior information on one or more facial images, realizing the apparatus control. Consequently, this method can train the recognition model, and use the trained recognition model to obtain the eye behavior information, so as to control the apparatus according to the eye behavior information, which can meet the user's demand for personalized control over the apparatus, improve the richness and convenience of apparatus control, and upgrade the user experience.

In order to realize the above embodiments, the present invention also proposes an apparatus control device 700.

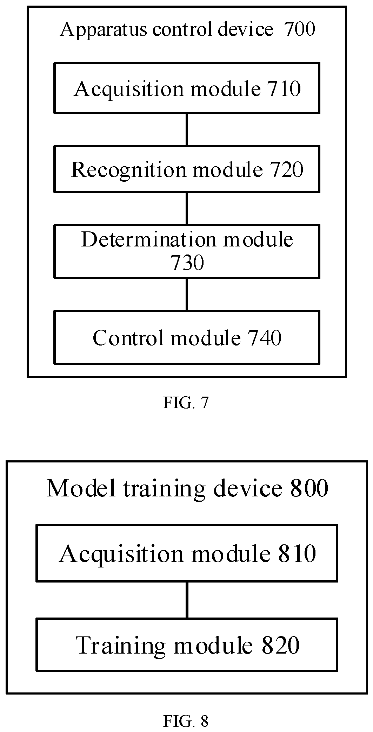

Fig. 7 is a block diagram of an apparatus control device 700 according to an embodiment of the present invention.

As shown in Fig. 7, the apparatus control device 700 according to the embodiment of the present invention includes: an acquisition module 710 configured to acquire one or more facial images; a recognition module 720 configured to perform an eye behavior recognition based on at least one of the facial images to obtain eye behavior information on at least one of the facial images; a determination module 730 configured to determine a target control instruction based on the eye behavior information on the one or more facial images; and a control module 740 configured to perform an apparatus control based on the target control instruction.

In an embodiment of the present invention, the eye behavior information includes a gaze direction. Determining, by the determination module 730, the target control instruction based on the eye behavior information on the one or more facial images includes: combining the gaze direction of at least one of the facial images according to an acquisition order of the one or more facial images to obtain a gaze direction sequence; matching the gaze direction sequence with a preset standard sequence; and determining the target control instruction according to a control instruction corresponding to the matched standard sequence.

In an embodiment of the present invention, matching the gaze direction sequence with the preset standard sequence by the determination module 730 includes: merging adjacent and identical gaze directions in the gaze direction sequence to obtain a merged sequence; and determining that the gaze direction sequence matches the standard sequence in case that at least one continuous sub-sequence in the merged sequence is identical to the preset standard sequence.

In an embodiment of the present invention, performing apparatus control based on the target control instruction by the control module 740 includes: controlling an application program run on a wearable apparatus based on the target control instruction. The application program executes at least one of: controlling operation of a smart home apparatus; playing or pausing display of a multimedia resource; or controlling a camera of the wearable apparatus to capture an object of gaze.

In an embodiment of the present invention, performing an eye behavior recognition by the recognition module 720 based on at least one of the facial images to obtain eye behavior information on at least one of the facial images includes: extracting an eye image for at least one of the facial images; extracting features from the eye image and the corresponding facial image, separately; and classifying based on the features of the eye image and the corresponding facial image to obtain the eye behavior information.

In an embodiment of the present invention, extracting the eye image for at least one of the facial images by the recognition module 720 includes: performing eye outer contour recognition on at least one of the facial images; and extracting, by a minimum bounding box surrounding an eye outer contour, a part located within the minimum bounding box as the extracted eye image.

In an embodiment of the present invention, the eye image includes a left eye image and a right eye image. Extracting features from the eye image and the corresponding facial image separately by the recognition module 720 includes: inputting the left eye image and the right eye image into corresponding first feature extraction networks for feature extraction, in which each of the first feature extraction networks extracts at least one of a pupil position feature or an eye shape feature; and inputting the facial image into a second feature extraction network for feature extraction, to obtain a feature of the facial image, in which a convolution kernel of the second feature extraction network is larger than a convolution kernel of the first feature extraction network.

In an embodiment of the present invention, classifying by the recognition module 720 based on the features of the eye image and the corresponding facial image to obtain the eye behavior information includes: inputting features extracted from the left eye image and the right eye image into a first fully connected layer for vector space mapping to obtain an output of the first fully connected layer; inputting the feature of the facial image into a second fully connected layer for vector space mapping to obtain an output of the second fully connected layer; inputting the output of the first fully connected layer and the output of the second fully connected layer into a third fully connected layer for vector space mapping to obtain an output of the third fully connected layer; and activating the output of the third fully connected layer by using an activation function layer to classify and obtain the eye behavior information.

In an embodiment of the present invention, each of the first feature extraction network and the second feature extraction network includes one or more convolution blocks connected in sequence, and each of the convolution blocks includes: a convolution layer that performs a convolution operation by using a convolution kernel; and a pooling layer that takes a most prominent feature output by the convolution layer in the convolution block as an input of a next convolution block.

It should be noted that the above explanation about the method embodiments is also applicable to this device embodiment, which will not be repeated here.

In this embodiment, the acquisition module acquires one or more facial images; the recognition module performs an eye behavior recognition based on each facial image to obtain eye behavior information on each facial image; and the determination module determines the target control instruction based on the eye behavior information on one or more facial images, so that the control module can control the apparatus based on the target control instruction. Consequently, the apparatus control device controls the apparatus through the eye behavior information, which can meet the user's demand for personalized control over the apparatus, improve the richness and convenience of apparatus control, and upgrade the user experience.

In order to realize the above embodiments, the present invention also proposes a model training device 800.

Fig. 8 is a block diagram of a model training device 800 according to an embodiment of the present invention.

As shown in Fig. 8, the model training device 800 of the embodiments of the present invention includes: an acquisition module 810 configured to acquire a training sample; and a training module 820 configured to train a recognition model by using the training sample. The trained recognition model performs an eye behavior recognition based on at least one of facial images to obtain eye behavior information on the at least one of the facial images, and determines a target control instruction based on the eye behavior information on the at least one of the facial images.

In an embodiment of the present invention, the training sample includes a facial sample image, an eye sample image, and annotated eye behavior information. Training the recognition model by using the training sample through the training module 820 includes: inputting the eye sample image and the facial sample image into the recognition model for feature extraction, and classifying based on extracted features to obtain predicted behavior information output by the recognition model; and adjusting a model parameter of the recognition model based on a difference between the predicted behavior information and the annotated eye behavior information.

In an embodiment of the present invention, the eye sample image includes a left eye sample image and a right eye sample image. Inputting the eye sample image and the facial sample image into the recognition model for feature extraction and classifying based on extracted features to obtain predicted behavior information output by the recognition model, through the training module 820, includes: inputting the left eye sample image and the right eye sample image into a first feature extraction network in the recognition model for feature extraction, in which the first feature extraction network extracts at least one of a pupil position feature or an eye shape feature; inputting the facial sample image into a second feature extraction network in the recognition model for feature extraction, in which a convolution kernel of the second feature extraction network is larger than a convolution kernel of the first feature extraction network; inputting features extracted from the left eye sample image and the right eye sample image into a first fully connected layer for vector space mapping, and inputting a feature of the facial sample image into a second fully connected layer for vector space mapping; inputting an output of the first fully connected layer and an output of the second fully connected layer into a third fully connected layer for vector space mapping to obtain an output of the third fully connected layer; and activating the output of the third fully connected layer by using an activation function layer to classify and obtain the predicted behavior information.

It should be noted that the above explanation about the method embodiments is also applicable to this device embodiment, which will not be repeated here.

In this embodiment, the acquisition module acquires training samples and the training module uses the training samples to train the recognition model. The trained recognition model is used for eye behavior recognition based on each facial image to obtain eye behavior information on each facial image, so as to determine the target control instruction for apparatus control based on the eye behavior information on one or more facial images. Consequently, the model training device can train the recognition model, and use the trained recognition model to obtain the eye behavior information, so as to control the apparatus according to the eye behavior information, which can meet the user's demand for personalized control over the apparatus, improve the richness and convenience of apparatus control, and upgrade the user experience.

In order to achieve the above purposes, the present invention proposes a model training method that includes: acquiring a training sample; and training a recognition model by using the training sample. The trained recognition model performs an eye behavior recognition based on at least one of facial images to obtain eye behavior information on the at least one of the facial images, and determines a target control instruction based on the eye behavior information on the at least one of the facial images.

In an embodiment of the present invention, the training sample includes a facial sample image, an eye sample image, and annotated eye behavior information. Training the recognition model by using the training sample includes: inputting the eye sample image and the facial sample image into the recognition model for feature extraction, and classifying based on extracted features to obtain predicted behavior information output by the recognition model; and adjusting a model parameter of the recognition model based on a difference between the predicted behavior information and the annotated eye behavior information.

In an embodiment of the present invention, the eye sample image includes a left eye sample image and a right eye sample image. Inputting the eye sample image and the facial sample image into the recognition model for feature extraction, and classifying based on extracted features to obtain predicted behavior information output by the recognition model includes: inputting the left eye sample image and the right eye sample image into a first feature extraction network in the recognition model for feature extraction, wherein the first feature extraction network extracts at least one of a pupil position feature or an eye shape feature; inputting the facial sample image into a second feature extraction network in the recognition model for feature extraction, wherein a convolution kernel of the second feature extraction network is larger than a convolution kernel of the first feature extraction network; inputting features extracted from the left eye sample image and the right eye sample image into a first fully connected layer for vector space mapping, and inputting a feature of the facial sample image into a second fully connected layer for vector space mapping; inputting an output of the first fully connected layer and an output of the second fully connected layer into a third fully connected layer for vector space mapping to obtain an output of the third fully connected layer; and activating the output of the third fully connected layer by using an activation function layer to classify and obtain the predicted behavior information.

In order to achieve the above purposes, the present invention also proposes an apparatus control device that includes: an acquisition module configured to acquire one or more facial images; a recognition module configured to perform an eye behavior recognition based on at least one of the facial images to obtain eye behavior information on at least one of the facial images; a determination module configured to determine a target control instruction based on the eye behavior information on the one or more facial images; and a control module configured to perform apparatus control based on the target control instruction.

In an embodiment of the present invention, the eye behavior information includes a gaze direction. Determining, by the determination module, the target control instruction based on the eye behavior information on the one or more facial images includes: combining the gaze direction of at least one of the facial images according to an acquisition order of the one or more facial images to obtain a gaze direction sequence; matching the gaze direction sequence with a preset standard sequence; and determining the target control instruction according to a control instruction corresponding to the matched standard sequence.

In an embodiment of the present invention, matching the gaze direction sequence with the preset standard sequence by the determination module includes: merging adjacent and identical gaze directions in the gaze direction sequence to obtain a merged sequence; and determining that the gaze direction sequence matches the standard sequence in case that at least one continuous sub-sequence in the merged sequence is identical to the preset standard sequence.

In an embodiment of the present invention, performing apparatus control based on the target control instruction by the control module includes: controlling an application program run on a wearable apparatus based on the target control instruction. The application program executes at least one of: controlling operation of a smart home apparatus; playing or pausing display of a multimedia resource; or controlling a camera of the wearable apparatus to capture an object of gaze.

In an embodiment of the present invention, performing an eye behavior recognition by the recognition module based on at least one of the facial images to obtain eye behavior information on at least one of the facial images includes: extracting an eye image for at least one of the facial images; extracting features from the eye image and the corresponding facial image, separately; and classifying based on the features of the eye image and the corresponding facial image to obtain the eye behavior information.

In an embodiment of the present invention, extracting the eye image for at least one of the facial images by the recognition module includes: performing eye outer contour recognition on at least one of the facial images; and extracting, by a minimum bounding box surrounding an eye outer contour, a part located within the minimum bounding box as the extracted eye image.

In an embodiment of the present invention, the eye image includes a left eye image and a right eye image. Extracting features from the eye image and the corresponding facial image separately by the recognition module includes: inputting the left eye image and the right eye image into corresponding first feature extraction networks for feature extraction, wherein each of the first feature extraction networks extracts at least one of a pupil position feature or an eye shape feature; and inputting the facial image into a second feature extraction network for feature extraction, to obtain a feature of the facial image, wherein a convolution kernel of the second feature extraction network is larger than a convolution kernel of the first feature extraction network.

In an embodiment of the present invention, classifying by the recognition module based on the features of the eye image and the corresponding facial image to obtain the eye behavior information includes: inputting features extracted from the left eye image and the right eye image into a first fully connected layer for vector space mapping to obtain an output of the first fully connected layer; inputting the feature of the facial image into a second fully connected layer for vector space mapping to obtain an output of the second fully connected layer; inputting the output of the first fully connected layer and the output of the second fully connected layer into a third fully connected layer for vector space mapping to obtain an output of the third fully connected layer; and activating the output of the third fully connected layer by using an activation function layer to classify and obtain the eye behavior information.

In an embodiment of the present invention, each of the first feature extraction network and the second feature extraction network includes one or more convolution blocks connected in sequence, and each of the convolution blocks includes: a convolution layer that performs a convolution operation by using a convolution kernel; and a pooling layer that takes a most prominent feature output by the convolution layer in the convolution block as an input of a next convolution block.

In order to achieve the above purposes, the present invention also proposes a model training device that includes: an acquisition module configured to acquire a training sample; and a training module configured to train a recognition model by using the training sample. The trained recognition model performs an eye behavior recognition based on at least one of facial images to obtain eye behavior information on the at least one of the facial images, and determines a target control instruction based on the eye behavior information on the at least one of the facial images.

In an embodiment of the present invention, the training sample includes a facial sample image, an eye sample image, and annotated eye behavior information. Training the recognition model by using the training sample through the training module includes: inputting the eye sample image and the facial sample image into the recognition model for feature extraction, and classifying based on extracted features to obtain predicted behavior information output by the recognition model; and adjusting a model parameter of the recognition model based on a difference between the predicted behavior information and the annotated eye behavior information.

In an embodiment of the present invention, the eye sample image includes a left eye sample image and a right eye sample image. Inputting the eye sample image and the facial sample image into the recognition model for feature extraction and classifying based on extracted features to obtain predicted behavior information output by the recognition model, through the training module, includes: inputting the left eye sample image and the right eye sample image into a first feature extraction network in the recognition model for feature extraction, wherein the first feature extraction network extracts at least one of a pupil position feature or an eye shape feature; inputting the facial sample image into a second feature extraction network in the recognition model for feature extraction, wherein a convolution kernel of the second feature extraction network is larger than a convolution kernel of the first feature extraction network; inputting features extracted from the left eye sample image and the right eye sample image into a first fully connected layer for vector space mapping, and inputting a feature of the facial sample image into a second fully connected layer for vector space mapping; inputting an output of the first fully connected layer and an output of the second fully connected layer into a third fully connected layer for vector space mapping to obtain an output of the third fully connected layer; and activating the output of the third fully connected layer by using an activation function layer to classify and obtain the predicted behavior information.

In order to realize the above embodiments, the present invention also provides an electronic apparatus that includes: at least one processor; and a memory communicating with the at least one processor. The memory stores an instruction executable by the at least one processor, and the instruction, when executed by the at least one processor, causes the at least one processor to execute the apparatus control method or the model training method.

In order to realize the above embodiments, the present invention also provides a computer-readable storage medium having stored therein an instruction that, when executed by a computer, causes the computer to execute the apparatus control method or the model training method.

In order to realize the above embodiments, the present invention also proposes a computer program product having stored therein an instruction that, when executed by a processor, causes the product to execute the apparatus control method or the model training method.

Reference throughout this specification to "an embodiment," "some embodiments," "an example," "a specific example," or "some examples," means that a particular feature, structure, material, or feature described in connection with the embodiment or example is included in at least one embodiment or example of the present invention. Thus, the appearances of these phrases in various places throughout this specification are not necessarily referring to the same embodiment or example of the present invention. Furthermore, the particular features, structures, materials, or features may be combined in any suitable manner in one or more embodiments or examples. Moreover, different embodiments or examples as well as features in different embodiments or examples can be combined and united by those skilled in the art in case of no mutual contradiction.

In addition, terms such as "first" and "second" are used herein for purposes of description and are not intended to indicate or imply relative importance or significance or to imply the number of indicated technical features. Thus, the feature defined with "first" and "second" may include one or more of this feature. In the description of the present invention, the term "a plurality of" means at least two, such as two or three, unless specified otherwise.

Any process or method description in the flowchart or described in other ways herein can be understood as representing a module, segment or part of code that includes one or more executable instructions for implementing customized logic functions or steps of the process, and the scope of embodiments of the present invention includes other possible implementations, in which functions can be performed out of the order shown or discussed, including in a substantially simultaneous manner or in the reverse order according to the functions involved, which should be understood by those skilled in the technical field to which the embodiments of the present invention belong.

The logic and/or steps represented in the flowchart or described in other ways herein, for example, can be regarded as a sequenced list of executable instructions for realizing logical functions, and can be embodied in any computer-readable medium for use by or in combination with an instruction execution system, device or apparatus (such as a computer-based system, a system including a processor or other systems that can fetch instructions from and execute instructions from the instruction execution system, device or apparatus). With regard to this specification, a "computer-readable medium" can be any device that can contain, store, communicate, propagate or transmit a program for use by or in connection with an instruction execution system, device or apparatus. More specific examples (non-exhaustive list) of computer-readable media include the following: electrical connection part (electronic device) with one or more wires, portable computer disk box (magnetic device), random access memory (RAM), read-only memory (ROM), erasable and editable read-only memory (EPROM or flash memory), optical fiber device, and portable CD-ROM. In addition, the computer-readable medium may even be paper or other suitable medium on which the program can be printed, because the program can be obtained electronically by, for example, optically scanning the paper or other medium, followed by editing, interpreting or processing in other suitable ways if necessary, and then stored in a computer memory.

It should be understood that various parts of the present invention can be implemented in hardware, software, firmware, or a combination thereof. In the above embodiments, a plurality of steps or methods can be realized by software or firmware stored in a memory and executed by an appropriate instruction execution system. For example, if it is implemented by hardware, as in another embodiment, it can be implemented by any one of the following technologies known in the art or their combination: discrete logic circuits with logic gates for implementing logic functions on data signals, application specific integrated circuits with appropriate combinational logic gates, programmable gate arrays (PGA), field programmable gate arrays (FPGA), etc.

Those skilled in the art can understand that all or part of the steps carried by the method of the above embodiment can be completed by instructing related hardware through a program, which can be stored in a computer-readable storage medium, and the program, when executed, includes one or a combination of the steps of the method embodiment.

In addition, each functional unit in each embodiment of the present invention may be integrated in one processing module, or each unit may exist physically alone, or two or more units may be integrated in one module. The above integrated modules can be realized in the form of hardware or software functional modules. The integrated module can also be stored in a computer-readable storage medium if it is implemented in the form of a software functional module and sold or used as an independent product.

The storage medium mentioned above can be read-only memory, magnetic disk or optical disk, etc. Although the embodiments of the present invention have been shown and described above, it can be understood that the above embodiments are exemplary and cannot be understood as limitations of the present invention, and those skilled in the art can make changes, modifications, substitutions and variations to the above embodiments within the scope of the present invention.

## Claims

1. An apparatus control method, comprising:
Acquiring (S101) one or more facial images of a subject;
performing (S102) an eye behavior recognition based on at least one of the facial images to obtain eye behavior information on the at least one of the facial images;
determining (S103) a target control instruction based on the eye behavior information on the one or more facial images; and
performing (S104) an apparatus control based on the target control instruction.

2. The apparatus control method according to claim 1, wherein:
the eye behavior information comprises a gaze direction; and
determining (S103) the target control instruction based on the eye behavior information on the one or more facial images comprises:
combining the gaze direction of the at least one of the facial images according to an acquisition order of the one or more facial images to obtain a gaze direction sequence;
matching the gaze direction sequence with a preset standard sequence; and
determining the target control instruction according to a control instruction corresponding to the matched standard sequence.

3. The apparatus control method according to claim 2, wherein matching the gaze direction sequence with the preset standard sequence comprises:
merging adjacent and identical gaze directions in the gaze direction sequence to obtain a merged sequence; and
determining that the gaze direction sequence matches the standard sequence in case that at least one continuous sub-sequence in the merged sequence is identical to the preset standard sequence.

4. The apparatus control method according to any one of claims 1-3, wherein performing (S104) the apparatus control based on the target control instruction comprises:
controlling an application program run on a wearable apparatus based on the target control instruction,
wherein the application program executes at least one of:
controlling operation of a smart home apparatus;
playing or pausing display of a multimedia resource; or
controlling a camera of the wearable apparatus to capture an object of gaze.

5. The apparatus control method according to any one of claims 1-4, wherein performing (S102) the eye behavior recognition based on the at least one of the facial images to obtain eye behavior information on the at least one of the facial images comprises:
Extracting (S301) an eye image for the at least one of the facial images;
Extracting (S302) features from the eye image and the corresponding facial image, separately; and
Classifying (S303) based on the features of the eye image and the corresponding facial image to obtain the eye behavior information.

6. The apparatus control method according to claim 5, wherein extracting (S301) the eye image for the at least one of the facial images comprises:
Performing an eye outer contour recognition on the at least one of the facial images; and
extracting, by a minimum bounding box surrounding an eye outer contour, a part located within the minimum bounding box as the extracted eye image.

7. The apparatus control method according to claim 5 or 6, wherein:
the eye image comprises a left eye image and a right eye image, and
extracting (S302) features from the eye image and the corresponding facial image separately comprises:
inputting the left eye image and the right eye image into corresponding first feature extraction networks for feature extraction, wherein each of the first feature extraction networks extracts at least one of a pupil position feature or an eye shape feature; and
inputting the facial image into a second feature extraction network for feature extraction, to obtain a feature of the facial image, wherein a convolution kernel of the second feature extraction network is larger than a convolution kernel of the first feature extraction network.

8. The apparatus control method according to claim 7, wherein classifying (S303) based on the features of the eye image and the corresponding facial image to obtain the eye behavior information comprises:
inputting features extracted from the left eye image and the right eye image into a first fully connected layer for vector space mapping to obtain an output of the first fully connected layer;
inputting the feature of the facial image into a second fully connected layer for vector space mapping to obtain an output of the second fully connected layer;
inputting the output of the first fully connected layer and the output of the second fully connected layer into a third fully connected layer for vector space mapping to obtain an output of the third fully connected layer; and
activating the output of the third fully connected layer by using an activation function layer to classify and obtain the eye behavior information.

9. The apparatus control method according to claim 7 or 8, wherein each of the first feature extraction network and the second feature extraction network comprises one or more convolution blocks connected in sequence, and
each of the convolution blocks comprises:
a convolution layer that performs a convolution operation by using a convolution kernel; and
a pooling layer that takes a most prominent feature output by the convolution layer in the convolution block as an input of a next convolution block.

10. The apparatus control method according to any one of claims 2 to 9, wherein, before determining the target control instruction according to the control instruction corresponding to the matched standard sequence, the apparatus control method comprises:
presetting a corresponding relationship between the standard sequence and the control instruction.

11. An electronic apparatus, comprising:
at least one processor; and
a memory configured to communicate with the at least one processor,
wherein the memory is configured to store an instruction executable by the at least one processor, and the instruction, when executed by the at least one processor, causes the at least one processor to execute the apparatus control method according to any one of claims 1-10.

12. A computer-readable storage medium having stored therein an instruction that, when executed by a computer, causes the computer to execute the apparatus control method according to any one of claims 1-10.
